# EUROPEAN PATENT APPLICATION

(11) **EP 4 700 940 A1**
(43) Date of publication of application: **25.02.2026**
(21) Application number: 24845893.7
(22) Date of filing: 16.07.2024
(51) Int. Cl.: H01M 50/242, H01M 50/124, H01M 50/121, H01M 50/119, H01M 50/126, H01M 50/105, H01M 10/052

(54) **POUCH TYPE BATTERY CASE AND LITHIUM SECONDARY BATTERY COMPRISING SAME**

(30) Priority: 27.07.2023 KR 20230098546; 10.07.2024 KR 20240091403
(71) Applicant: LG Energy Solution, Ltd., Seoul 07335 (KR)
(72) Inventor: KANG, Gyung Soo, Daejeon 34122 (KR); JEONG, Yeon Beom, Daejeon 34122 (KR); PAENG, Ki Hoon, Daejeon 34122 (KR); MAENG, Han Sol, Daejeon 34122 (KR)
(74) Representative: Plasseraud IP
(86) International application number: PCT/KR2024/010141
(87) International publication number: WO 2025/023590

(57) **Abstract**

A pouch-type battery case according to the present invention includes a shrinkable pouch film laminate in which a base layer, a gas barrier layer, and a sealant layer which are sequentially stacked, and a shape-memory resin film is disposed between the gas barrier layer and the sealant layer.

## Description

### TECHNICAL FIELD

The present invention relates to a pouch-type battery case and a lithium secondary battery including the same, and more particularly, to a pouch-type battery case with improved safety and a lithium secondary battery including the same.

### BACKGROUND ART

In general, types of a secondary battery include a nickel cadmium battery, a nickel hydrogen battery, a lithium ion battery, a lithium ion polymer battery, and the like. Such a secondary battery is applied and used in small products such as digital cameras, P-DVDs, MP3P, mobile phones, PDAs, portable game devices, power tools, and e-bikes, as well as large products that require high power such as electric vehicles and hybrid vehicles, and power storage devices for storing surplus generated power or renewable energy, and power storage devices for backup power.

In order to manufacture such a secondary battery, an electrode active material slurry is first applied on a positive electrode current collector and a negative electrode current collector to manufacture a positive electrode and a negative electrode, and the positive electrode and the negative electrode are stacked on both sides of a separator to form an electrode assembly having a predetermined shape. Then, the electrode assembly is received in a battery case, followed by injecting an electrolyte thereto, and sealing.

The secondary battery is classified into a pouch-type secondary battery, a can-type secondary battery according to the material of the case accommodating the electrode assembly. The pouch-type secondary battery accommodates the electrode assembly in a pouch made of a flexible polymer material. The can-type secondary battery accommodates the electrode assembly in a case made of a material such as a metal or plastic.

A pouch, which is a case of the pouch-type secondary battery, is manufactured by performing press processing on a flexible pouch film laminate body, thereby forming a cup portion. When the cup portion is formed, an electrode assembly is received in an accommodation space inside the cup portion and a sealing portion is sealed to manufacture a secondary battery.

In general, the pouch-type battery case is formed of a plurality of layers in which a polymer film such as polyethylene terephthalate is laminated on one surface of a gas barrier layer made of a metal, and a sealant layer is laminated on the other surface thereof. However, in the case of a typical pouch-type battery case, as the size is required to be increased due to the higher density and larger capacity of a battery, the molding depth has become deeper, which has led to a problem in which the tensile stress caused by a swelling phenomenon is large, and accordingly, the risk of explosion is increased.

### DISCLOSURE OF THE INVENTION

### TECHNICAL PROBLEM

In order to solve the above problem, the present invention provides a pouch-type battery case having a shape-memory resin film additionally disposed in a film laminate structure of the pouch-type battery case to respond to the risk of explosion caused by a swelling phenomenon, and thus, may suppress the swelling phenomenon by using a function of shrinkage at high temperatures, and may improve safety through effective energy drain in a situation with the risk of explosion.

Problems to be solved by the present invention are not limited to the above-mentioned problem, and other problems that are not mentioned may be apparent to those skilled in the art from the following description.

### TECHNICAL SOLUTION

[1] A pouch-type battery case according to an embodiment of the present invention includes a shrinkable pouch film laminate in which a base layer, a gas barrier layer, and a sealant layer which are sequentially stacked, and a shape-memory resin film is disposed between the gas barrier layer and the sealant layer.
[2] In [1] above, the shape-memory resin film may have a thickness of 30 µm to 80 µm.
[3] In [1] and [2] above, the pouch-type battery case may be provided with a cup portion having a recessed shape to receive an electrode assembly, and a sealing portion formed along the circumference of the cup portion, wherein the shrinkable pouch film laminate may be provided in a region excluding the sealing portion.
[4] In any one or more among [1] to [3] above, the shrinkable pouch film laminate may be provided in a cup portion spaced apart from the sealing portion by a width equal to or greater than a width of the sealing portion.
[5] In any one or more among [1] to [4] above, the sealing portion may be provided with a general pouch film laminate without a shape-memory resin film.
[6] In any one or more among [1] to [5] above, the shape-memory resin film may include one or more selected from the group consisting of fluorinated ethylene propylene (FEP), polytetrafluoroethylene (PTFE), polyolefin, Poly vinyl chloride (PVC), polyvinylidene fluoride (PVDF), silicone rubber, and a fluoropolymer elastomer.
[7] In any one or more among [1] to [6] above, the shape-memory resin film may memorize a shape such that the shape-memory resin film shrinks by at least 500% based on the area at 100°C or higher.
[8] In any one or more among [1] to [7] above, the gas barrier layer may include aluminum.
[9] In any one or more among [1] to [8] above, in the shrinkable pouch film laminate, the shape-memory resin film is additionally disposed between the base layer and the gas barrier layer.
[10] In any one or more among [1] to [9] above, the base layer may have a multi-layered structure including two or more layers formed of different polymers from each other, wherein the shape-memory resin film may be additionally disposed between the outermost layer and the innermost layer of the composite film.
[11] A lithium secondary battery according to another embodiment of the present invention includes the above-described pouch-type battery case, and an electrode assembly accommodated inside the pouch-type battery case.

### ADVANTAGEOUS EFFECTS

A pouch-type battery case according to an embodiment of the present invention has a shape-memory resin film additionally disposed in a film laminate structure of the pouch-type battery case to respond to the risk of explosion caused by a swelling phenomenon, and thus, may suppress the swelling phenomenon by using a function of shrinkage at high temperatures, and may significantly improve safety through effective energy drain in a situation with the risk of explosion.

The shrinkable pouch film laminate includes a shape-memory resin film, and is applied with a shape-memory resin film memorizing a shape such that the shape-memory resin film shrinks by 500% or more at high temperatures, thereby allowing the battery case to shrink in the event of abnormal behavior of a lithium secondary battery, so that the risk of explosion may be prevented, and accordingly, safety may be greatly improved.

### BRIEF DESCRIPTION OF THE DRAWINGS

FIG. 1 is a cross-sectional view of a general pouch film laminate.
FIG. 2 is a cross-sectional view of a shrinkable pouch film laminate according to the present invention.
FIG. 3 is a plan view of a lithium secondary battery including a pouch-type battery case.
FIG. 4 is an exploded assembly view of the lithium secondary battery according to FIG. 3.
FIG. 5 is a plan view of a lithium secondary battery including a pouch-type battery case according to the present invention.
FIG. 6 is a vertical cross-sectional view illustrating the pouch-type battery case taken along line S-S' in FIG. 5.

### MODE FOR CARRYING OUT THE INVENTION

Advantages and features of the present invention, and implementation methods thereof will be clarified through following embodiments described with reference to the accompanying drawings. The present invention may, however, be embodied in different forms and should not be construed as limited to the embodiments set forth herein. Rather, these embodiments are provided so that this disclosure will be thorough and complete, and will fully convey the scope of the present invention to those skilled in the art. Further, the present invention is only defined by scopes of claims. Like reference numerals refer to like elements throughout the specification.

Unless otherwise defined, all the terms used herein (including technical and scientific terms) will be used in a sense that can be commonly understood to those of ordinary skill in the art to which the inventive concept pertains. In addition, the terms that are defined in a commonly used dictionary are not interpreted ideally or excessively unless specifically defined.

The terms used herein are for the purpose of describing embodiments and are not intended to be limiting of the present invention. In the present specification, singular forms include plural forms unless the context clearly indicates otherwise. As used herein, the terms "comprises" and/or "comprising" are intended to be inclusive of the stated elements, and do not exclude the possibility of the presence or the addition of one or more other elements.

Hereinafter, preferred embodiments of the present invention will be described in detail with reference to the accompanying drawings.

In the present specification, when a portion is said to include a certain element, it means that the portion may further include another element rather than excluding another element unless otherwise stated.

In the present specification, the upper part of a drawing may be referred to as an "upper portion" or "upper side" of a configuration illustrated in the drawing, and the lower part thereof may be referred to as a "lower portion" or "lower side". In addition, in a drawing, the remaining portion except a portion between an upper portion and a lower portion of an illustrated configuration or the upper portion and the lower portion may be referred to as a "side portion" or "side surface". The above-described relative terms such as "upper portion", "upper side", and the like may be used to describe the relationship between components illustrated in a drawing, but the present disclosure is not limited by such terms.

In the present specification, a direction toward an inner space of one structure may be referred to as "inner side," a direction protruding to an open outer space may be referred to as "outer side." The above-described relative terms such as "inner side," "outer side," and the like may be used to describe the relationship between components illustrated in a drawing, but the present disclosure is not limited by such terms.

In the present specification, the description of "A and/or B" means A, or B, or A and B.

In the present specification, when a part is referred to as being connected to another part, it includes not only the case of being directly connected thereto but also the case of being connected thereto having another component therebetween.

In the present specification, each of the pouch-type battery case and the lithium secondary battery includes one or more of technical features and/or technical configurations to be described below, and the technical features and/or technical configurations may be combined in various ways.

### Pouch-type battery case

A pouch-type battery case according to an embodiment of the present invention includes a shrinkable pouch film laminate, and the shrinkable pouch film laminate is characterized in that a base layer, a gas barrier layer, and a sealant layer are sequentially stacked, and a shape-memory resin film is disposed between the gas barrier layer and the sealant layer.

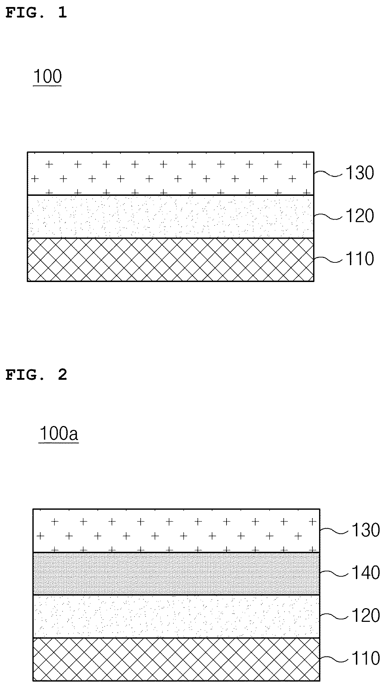

Hereinafter, referring to FIGS. 1 and 2, a shrinkable pouch film laminate, and each layer included in the pouch film laminate will be described in detail.

FIG. 1 is a cross-sectional view of a general pouch film laminate 100.

As illustrated in FIG. 1, the general pouch film laminate 100 includes a base layer 110, a gas barrier layer 120, and a sealant layer 130.

### (1) Base layer

The base layer 110 is formed on the outermost layer of a pouch film laminate 100 to protect a secondary battery from external friction and collision. The base layer 110 is made of a polymer to electrically insulate an electrode assembly from the outside. The base layer 110 may be made of one or more materials selected from the group consisting of polyethylene, polypropylene, polycarbonate, polyethylene terephthalate, polyvinyl chloride, acrylic polymer, polyacrylonitrile, polyimide, polyamide, cellulose, aramid, nylon, polyester, polyparaphenylene benzobisoxazole, polyarylate, Teflon, and glass fiber. Among the above, the base layer 110 may be made of polyethylene terephthalate (PET), nylon, or a combination thereof having wear resistance and heat resistance.

The base layer 110 may have a single-film structure formed of any one material. Alternatively, the base layer 110 may have a composite-film structure in which two or more materials respectively form layers.

A thickness of the base layer 110 may be 5 µm to 50 µm, specifically 7 µm to 50 µm, and more specifically 7 µm to 40 µm. If the thickness of the base layer 110 satisfies the above-described ranges, the pouch film laminate may have excellent external insulation properties, and the entire pouch is not thick, so that energy density with respect to the volume of a secondary battery may be excellent.

### (2) Gas barrier layer

The gas barrier layer 120 is stacked between the base layer 110 and the sealant layer 130 to secure mechanical strength of a pouch, block the entry of a gas, moisture, or the like from the outside of the pouch-type battery case, and prevent the leakage of an electrolyte from the inside of the pouch-type battery case.

The gas barrier layer 120 may be formed of a metal, and specifically, may be formed of an aluminum alloy thin film. If the gas barrier layer is formed by using an aluminum alloy thin film, it is possible to secure mechanical strength of a predetermined level or more, lighten the weight, complement electrochemical properties of an electrode assembly and an electrolyte, secure heat dissipation, and the like. The aluminum alloy thin film may include a metal element other than aluminum, for example, one or two or more selected from the group consisting of iron (Fe), copper (Cu), chromium (Cr), manganese (Mn), nickel (Ni), magnesium (Mg), silicon (Si), and zinc (Zn).

A thickness of the gas barrier layer 120 may be 40 µm to 100 µm, specifically 50 µm to 90 µm, and more specifically 55 µm to 85 µm. If the thickness of the gas barrier layer satisfies the above-described ranges, moldability and gas barrier performance are excellent when molding a cup portion.

### (3) Sealant layer

The sealant layer 130 is to be bonded through thermal compression, thereby sealing a battery case, and is positioned in the innermost layer of the pouch film laminate body 100.

The sealant layer 130 is a surface in contact with an electrolyte and an electrode assembly after being molded into the battery case, and thus, is required to have insulation properties and corrosion resistance, and is required to completely seal the inside to block the movement of substances between the inside and the outside, and thus is required to have high sealing properties.

The sealant layer 130 may be made of a polymer material, and for example, may be made of one or more selected from the group consisting of polyethylene, polypropylene, polycarbonate, polyethylene terephthalate, polyvinyl chloride, acrylic polymer, polyacrylonitrile, polyimide, polyamide, cellulose, aramid, nylon, polyester, polyparaphenylene benzobisazole, polyarylate, and Teflon, and among the above, it is particularly preferable that polypropylene (PP) is included, which has excellent mechanical properties such as tensile strength, stiffness, surface hardness, abrasion resistance, and heat resistance, and excellent chemical properties such as corrosion resistance.

The sealant layer 130 may include polypropylene, cast polypropylene (CPP), acid-modified polypropylene, a polypropylene-butylene-ethylene copolymer, or a combination thereof.

The sealant layer 130 may have a single-layered structure, or may have a multi-layered structure including two or more layers composed of different polymer materials from each other.

The sealant layer may have a total thickness of 60 µm to 100 µm, preferably 60 µm to 90 µm, and more preferably 60 µm to 80 µm. If the sealant layer is too thin, the sealing durability and insulation properties may be reduced, and if too thick, the bendability may be reduced and the total thickness of the pouch film laminate body may increase, resulting in a decrease in energy density relative to volume.

FIG. 2 is a cross-sectional view of a shrinkable pouch film laminate 100a.

As illustrated in FIG. 2, compared to the general pouch film laminate 100, the shrinkable pouch film laminate 100a has a structure in which a shape-memory resin film 140 is disposed between the gas barrier layer 120 and the sealant layer 130.

### (4) Shape-memory resin film

The shape-memory resin film 140 is disposed between the gas barrier layer 120 and the sealant layer 130, and is disposed inside a pouch based on the gas barrier layer 120. The shape-memory resin film may be manufactured through a shape memory process by using a polymer material capable of storing a shape, and the shape stored as described above has characteristic of being deformed at high temperatures.

The shape-memory resin film 140 may be manufactured by a method including the steps of softening a target resin film by applying heat thereto to a temperature higher than or equal to a glass transition temperature (Tg) of the target resin film, deforming the resin film by applying force thereto, and cooling the resin film in a deformed shape to a temperature lower than or equal to the glass transition temperature (Tg) of the resin film.

The shape-memory resin film 140 is applied to a battery case by being included in the shrinkable pouch film laminate, and thus, may induce a short circuit in an early stage due to the collapse of the structure of the battery case caused by the characteristic of shrinkage at a high temperature in the event of abnormal behavior of a battery, or may eliminate the risk of explosion caused by energy condensation since energy drain easily occurs.

The shape-memory resin film may memorize a shape such that the shape-memory resin film shrinks by at least 500% based on the area at 100°C or higher. A shrinkage rate may be determined depending on the force applied in the step of deforming the resin film during a shape storing process, and may be applied according to an applied temperature, and in the above-described process, a shrinkage temperature may be 100 °C or higher, 110 °C or higher, 120 °C or higher, or 130 °C or higher, and the shrinkage rate may be 500% or more based on the area, preferably 550% or more, 600% or more, 650% or more, 700% or more, or 750% or more based on the area. In the case of having a shrinkage force in the above-described range, it is possible to induce energy drain through the destruction of a battery case in response to abnormal behavior of a battery, and thus, it may be preferable to apply the shrinkage force as described above when a shape is stored in the shape-memory resin film.

Meanwhile, a shape-memory alloy is heavier than the shape-memory resin film, and thus, has a large loss in terms of energy density, and has a very high temperature applied in a shape storage process, and thus, has a difficulty during a manufacturing process, and also has a shrinkage rate of 100 times or more lower than that of the resin film, and thus, is not able to induce a short circuit, which may result in achieving no energy drain effect.

If the shape-memory resin film 140 is disposed on an outer surface of the pouch-type battery case based on the gas barrier layer 120, heat is accumulated inside by the gas barrier layer 120, and then a shrinkage occurs through a shape storage, so that it is not possible to allow energy drain to occur early, and although there is a possibility of performing a function of suppressing a thermal event through an effect of preventing swelling, but in general, since a lithium secondary battery, particularly a secondary battery for automobiles or energy storage is provided in the form of a module or pack with a plurality of battery cells in a stack form, so that a suppression of the swelling phenomenon may be prevented by the form of the module or pack, and rather, energy may be condensed and led to explosion. Therefore, there is a need for the shape-memory resin film 140 to be disposed inside the gas barrier layer 120.

The shape-memory resin film 140 may have a thickness of 30 µm to 80 µm, preferably 35 µm or more, 40 µm or more, or 45 µm or more, and more preferably 50 µm or more or 52 µm or more, and may preferably be 75 µm or less, 70 µm or less, or 65 µm or less. When the thickness is within the above-described ranges, it is possible to prevent energy density degradation due to an increase in the thickness of the pouch film laminate, and to exclude a possibility of generating a short circuit in a normal driving region.

The shrinkable pouch film laminate 100a is characterized in that the shape-memory resin film 140 is additionally disposed between the base layer 110 and the gas barrier layer 120. Alternatively, the base layer may have a multi-layered structure including two or more layers formed of different polymers from each other, wherein a shape-memory resin film may be additionally disposed between the outermost layer and the innermost layer of the multi-layered structure. Alternatively, a shape-memory resin film may be disposed inside the base layer 110, and the shape-memory resin film may be disposed between the base layer 110 and the gas barrier layer 120.

If the shrinkable pouch film laminate 100a is provided such that the shape-memory resin film 140 is disposed between the gas barrier layer 120 and the sealant layer 130, a purpose of improving safety may be achieved, and additionally, the shape-memory resin film 140 may further be applied to any one portion of a stacked structure in the pouch film laminate. However, if the additional shape-memory resin film is disposed, it is necessary to consider all factors, such as energy density, moldability, short-circuit induction effect, and sealing properties, by the total thickness of the pouch-type battery case.

The shape-memory resin film 140 may include one or more selected from the group consisting of fluorinated ethylene propylene (FEP), polytetrafluoroethylene (PTFE), polyolefin, Poly vinyl chloride (PVC), polyvinylidene fluoride (PVDF), silicone rubber, and a fluoropolymer elastomer.

The general pouch film laminate 100 and the shrinkable pouch film laminate 100a may be manufactured by a method for manufacturing a pouch film laminate known in the art. For example, the pouch film laminate of the present invention may be manufactured by a method of attaching a base layer 110 to an upper surface of a gas barrier layer 120 by means of an adhesive, and forming a sealant layer 130 on a lower surface of the gas barrier layer 120 by means of co-extrusion or an adhesive layer, but is not limited thereto.

The shrinkable pouch film laminate may have a total thickness of 160 µm to 200 µm, preferably 180 µm to 200 µm. If the thickness of the pouch film laminate satisfies the above-described ranges, it is possible to increase a molding depth while minimizing reduction in a battery accommodation space, degradation in sealing durability, and the like due to an increase in the thickness of the pouch film laminate.

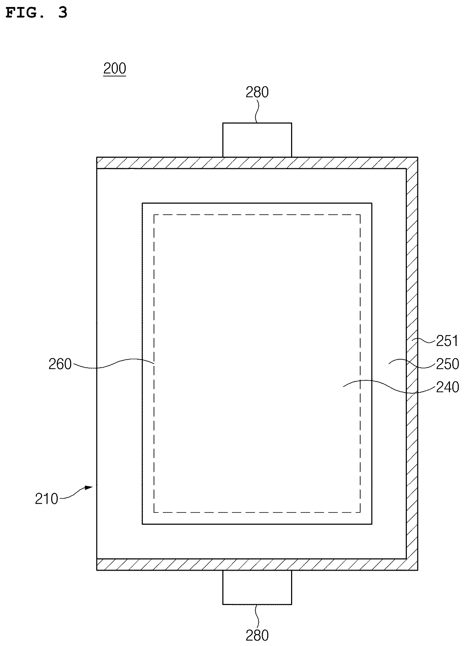

Hereinafter, the structure of the pouch-type battery case 210 will be described with reference to FIG. 3. FIG. 3 is a plan view of an example of a lithium secondary battery 200 including the pouch-type battery case 210.

The pouch-type battery case 210 may include a cup portion 240 having a recessed shape to receive an electrode assembly 260, and a sealing portion 251 formed along the circumference of the cup portion 240. The sealing portion 251 is a region marked by a hatched pattern in FIG. 3, which is positioned in a terrace portion 250, and may be formed by sealing all or part of the terrace portion 250. In addition, the cup portion 240 may have a recessed shape by means of molding to receive the electrode assembly 260, and the electrode assembly may be electrically connected to an electrode tab, and the electrode tab may be electrically connected to an electrode lead 280 which is drawn to the outside.

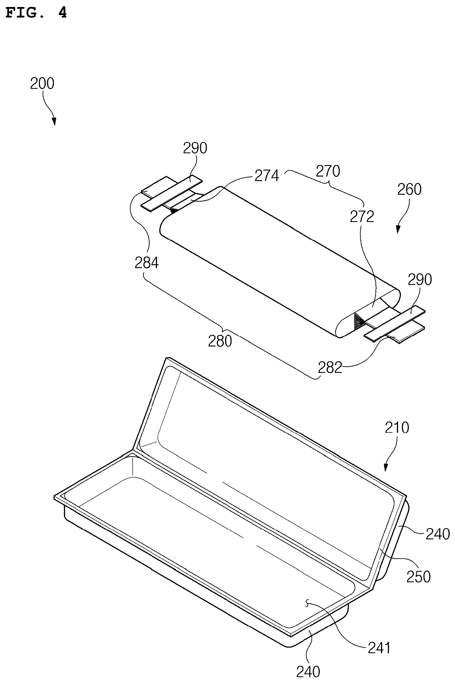

FIG. 4 is an exploded assembly view of the lithium secondary battery 200 including the electrode assembly 260 according to FIG. 3 and the pouch-type battery case 210 in which the electrode assembly is accommodated.

As illustrated in FIG. 4, the lithium secondary battery 200 according to the present invention may include the pouch-type battery case 210, and the electrode assembly 260 to be accommodated in the pouch-type battery case 210. The electrode assembly 260 may be formed by stacking a positive electrode, a separator, and a negative electrode, and may include an electrode tab 270, the electrode lead 280, and a lead film 290. The lithium secondary battery 200 may be manufactured by injecting an electrolyte into the pouch-type battery case 210 in a state in which the electrode assembly 260 is received thereinside, and then sealing the terrace portion 250.

The pouch-type battery type case 210 may accommodate the electrode assembly 260 thereinside. The pouch-type battery case 210 may be manufactured by molding the pouch film laminates 100 and 100a of FIGS. 1 and 2 described above. Since detailed configurations and physical properties of the pouch film laminates 100 and 100a are the same as described above, specific descriptions thereof will be omitted.

In order to manufacture the pouch-type battery case 210, the pouch film laminates 100 and 100a are subjected to drawing-molding and stretching by punching or the like to form the cup portion 240 including a pocket-shaped receiving space 241 so as to receive the electrode assembly 260.

As illustrated in FIG. 4, the pouch-type battery case 210 may include an upper case and a lower case. In an embodiment, the lower case may have the cup portion 240 to include the receiving space 241 capable of receiving the electrode assembly 260, and the upper case may cover the receiving space 241 from the above to prevent the electrode assembly 260 from being separated to the outside of the battery case 210. The upper and lower cases may be manufactured by being connected to each other on one side, but are not limited thereto, and may be manufactured in various ways, such as being separated from each other and separately manufactured. Accordingly, a sealing portion may be formed on three sides, or may be formed on all four sides, and it may be possible that the cup portion is present only in the lower case.

The pouch-type battery case 210 may be sealed while accommodating the electrode assembly 260 such that a portion of the electrode lead 280, that is, a terminal portion, is exposed. Specifically, when the electrode lead 280 is connected to the electrode tab 270 of the electrode assembly 260, and the lead film 290 is formed in a portion of the electrode lead 280, the electrode assembly 260 may be received in the receiving space 241 provided in the cup portion 240 of the lower case, and the upper case may cover the receiving space 241 from the above. Subsequently, an electrolyte may be injected into the receiving space 241, and the terrace portion 250 formed at edges of the upper and lower cases may be sealed. The electrolyte is for moving lithium ions generated by an electrochemical reaction of an electrode during charging/discharging of the secondary battery 200, and may include a non-aqueous organic electrolyte solution, which is a mixture of a lithium salt and an organic solvent or a polymer using a polymer electrolyte. Furthermore, the electrolyte may include a sulfide-based, oxide-based, or polymer-based solid electrolyte, and such a solid electrolyte may have flexibility to be easily deformed by an external force.

According to an embodiment of the present invention, the pouch-type battery case may be provided with a cup portion having a recessed shape to receive an electrode assembly, and a sealing portion formed along the circumference of the cup portion, wherein the shrinkable pouch film laminate may be provided in a region excluding the sealing portion. That is, the sealing portion may be provided with a general pouch film laminate without a shape-memory resin film.

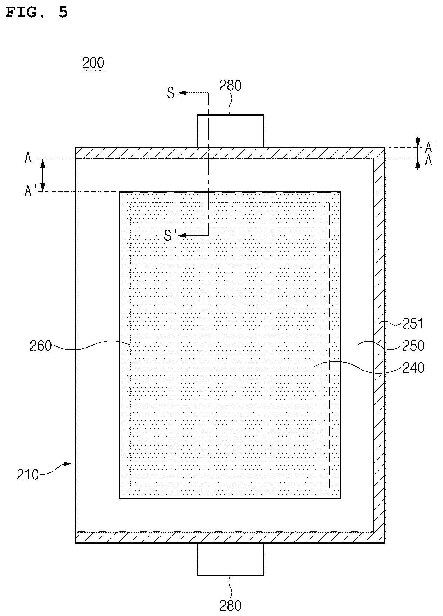

FIG. 5 is a plan view of a lithium secondary battery including the pouch-type battery case 210 according to an embodiment of the present invention.

Referring to FIG. 5, the shrinkable pouch film laminate (shaded portion) may be formed in a region excluding the sealing portion 251, that is, part of the cup portion 240 and the terrace portion 250, and a general pouch film laminate may be provided in the sealing portion 251. Since the shrinkable pouch film laminate includes a shape-memory resin film, the shrinkable pouch film laminate may shrink due to a sealing temperature, and even if the shrinkable pouch film laminate does not shrink, sealing time may increase due to the thickness thereof, so that sealing properties may be degraded.

The shrinkable pouch film laminate according to an embodiment of the present invention may be provided in the cup portion spaced apart from the sealing portion by a width A-A" or greater of the sealing portion, and may be spaced apart from the sealing portion by a gap of A-A' illustrated in FIG. 5. That is, the gap of A-A' may be greater than or equal to the gap of A-A", and in this case, it is possible to provide a pouch-type battery case capable of maximally exhibiting the effect of energy drain without affecting the sealing properties.

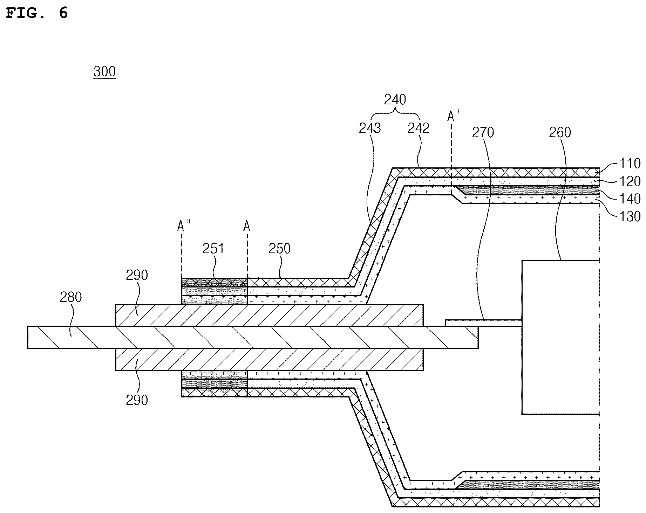

FIG. 6 is a cross-sectional view of a pouch-type battery case taken along line S-S' of FIG. 5. The cup portion 240 is provided with a flat portion 242 of a portion in which the electrode assembly is received, and an inclined portion 243 connected to the terrace portion 250 from the flat portion 242 and formed by molding, wherein part or all of the terrace portion 250 may be formed into the sealing portion 251 by sealing. The shrinkable pouch film laminate may be provided from the right side of line A of FIG. 6, and may preferably be provided from a portion spaced apart by a gap of at least A and A". Accordingly, the shrinkable pouch film laminate may also be provided in the terrace portion 250, may also be provided in the inclined portion 243, and may also be provided in the flat portion 242, and may preferably be provided at least in the flat portion 242.

Hereinafter, the remaining members except the pouch-type battery case of the lithium secondary battery are further described with reference to FIG. 4.

The electrode assembly 260 may be formed by alternately stacking an electrode and a separator. Specifically, the electrode assembly 260 may be formed in a predetermined shape by applying a slurry obtained by mixing an electrode active material, a binder and/or a conductive material to a positive electrode current collector and a negative electrode current collector, thereby manufacturing a positive electrode and a negative electrode, and stacking the positive electrode and the negative electrode respectively on both sides of a separator. The electrode assembly 260 may be inserted into the pouch-type battery case 210, and then sealed by the pouch-type battery case 210 after injecting an electrolyte thereto. In an embodiment, types of the electrode assembly 260 may include a stack type, a jelly-roll type, a stack and fold type, and the like, but are not limited thereto.

The electrode assembly 260 may include two types of electrodes, a positive electrode and a negative electrode, and a separator interposed between the electrodes to insulate the electrodes from each other. The positive electrode and the negative electrode may each have a structure in which an active material slurry is applied to an electrode current collector in the form of metal foil or metal mesh including aluminum and copper. A slurry may typically be formed by stirring a granular active material, an auxiliary conductor, a binder, a conductive material, and the like in a state in which a solvent is added. The solvent may be removed in a subsequent process.

The electrode tab 270 may be connected to each of the positive electrode and the negative electrode of the electrode assembly 260, and may protrude to the outside from the electrode assembly 260 to serve as a path through which electrons move between the inside and the outside of the electrode assembly 260. An electrode current collector of the electrode assembly 260 may be composed of a portion to which an electrode active material is applied to and a terminal portion to which the electrode active material is not applied, that is, an uncoated portion. The electrode tab 270 may be formed by cutting the uncoated portion or may be formed by connecting a separate conductive member to the uncoated portion by ultrasonic welding or the like. As illustrated in FIG. 3, the electrode tab 270 may protrude in different directions from the electrode assembly 260, but is not limited thereto, and may protrude in various directions such as protruding side by side in the same direction from one side thereof.

The electrode lead 280 may supply electricity to the outside of the secondary battery 200. The electrode lead 280 may be connected to the electrode tab 270 of the electrode assembly 260 by spot welding or the like. At least a portion of the electrode lead 280 may be surrounded by the lead film 290. In an embodiment, one end of the electrode lead 280 may be connected to the electrode tab 270 and the other end thereof may respectively protrude to the outside of the battery case 210. The electrode lead 280 may include a positive electrode lead 282 having one end connected to a positive electrode tab 272 and extending in a direction in which the positive electrode tab 272 protrudes, and a negative electrode lead 284 having one end connected to a negative electrode tab 274 and extending in a direction in which the negative electrode tab 274 protrudes.

Both the positive electrode lead 282 and the negative electrode lead 284 may protrude to the outside of the battery case 210. Therefore, electricity generated inside the electrode assembly 260 may be supplied to the outside. In addition, since the positive electrode tab 272 and the negative electrode tab 274 are each formed to protrude in various directions, the positive electrode lead 282 and the negative electrode lead 284 may also extend in various directions. In an embodiment, the positive electrode lead 282 and the negative electrode lead 284 may be made of different materials. That is, the positive electrode lead 282 and the positive electrode current collector may be made of the same material, which is aluminum (Al), and the negative electrode lead 284 and the negative electrode current collector may be made of the same material, which is copper (Cu) or copper coated with nickel (Ni). A portion of the electrode lead 280 protruding to the outside of the battery case 210 may become a terminal portion and be electrically connected to an external terminal.

### Examples and Comparative Examples

Hereinafter, the present invention will be described in more detail with reference to specific examples. However, the following examples are for illustrative purposes only to facilitate the understanding of the present invention, and do not limit the scope of the present invention. It will be apparent to those skilled in the art that various changes and modifications can be made without departing from the scope and spirit of the invention, and it is obvious that such variations and modifications are within the scope of the appended claims.

### Example 1

On one surface of an aluminum alloy thin film having a width of 266 mm, a length of 50 m, and a thickness of 60 µm, a polyethyleneterephthalate film having a width of 266 mm, a length of 50 m, and a thickness of 12 µm and a nylon film having a width of 266 mm, a length of 50 m, and a thickness of 25 µm were stacked, and on the other surface thereof, a shape-memory resin film having a width of 256 mm, a length of 45 m, and a thickness of 50 µm, and cast polypropylene (CPP) having a width of 266 mm, a length of 50 m, and a thickness of 50 µm were stacked to manufacture a pouch film laminate having a structure of polyethyleneterephthalate/nylon/aluminum alloy thin film/shape-memory resin film/cast polypropylene.

At this time, the shape-memory resin film was prepared by heating polytetrafluoroethylene to 130 °C, applying stress of 2 MPa thereto, and then cooling the polytetrafluoroethylene, and used.

Here, the polyethyleneterephthalate and the nylon were a base layer, the aluminum alloy thin film was a gas barrier layer, and the cast polypropylene was the sealant layer.

The manufactured pouch film laminate was mounted on a two-cup molding apparatus provided with a die and a punch, and then subjected to drawing molding by lowering the punch with a pressure of 0.5 MPa and a rate of 20 mm/min such that a molding depth was 9.6 mm to manufacture a pouch-type battery case.

### Example 2

A pouch-type battery case was manufactured in the same manner as in Example 1, except that a shape-memory resin film was further stacked between the nylon and the aluminum alloy thin film.

### Comparative Example 1

A pouch-type battery case was manufactured in the same manner as in Example 1, except that a shape-memory resin film was not stacked.

### Comparative Example 2

A pouch-type battery case was manufactured in the same manner as in Example 1, except that a shape-memory resin film was not stacked between the aluminum alloy thin film and the cast polypropylene, but staked only between the nylon and the aluminum alloy thin film.

### Comparative Example 3

A pouch-type battery case was manufactured in the same manner as in Example 1, except that a nickel-titanium alloy was applied instead of a shape-memory resin film.

Here, the nickel-titanium alloy was used after being heated to 130°C and subjected to a stress of 2 MPa, followed by cooling, in the same manner as the polytetrafluoroethylene in Example 1.

### Comparative Example 4

A pouch-shaped battery case was manufactured in the same manner as in Example 1, except that the polytetrafluoroethylene which was heated to 100 °C, applied with stress of 1 MPa, and then cooled.

### Experimental Example 1

The pouch-type battery cases manufactured in Examples and Comparative Examples were applied to a lithium secondary battery below and evaluated as follows, and the results are shown in Table 1. Here, the experimental results are shown in Table 1 below. At this time, in Table 1, the "⊚" mark indicates very good, the "∘" mark indicates good, the "△" mark indicates average, and the "X" mark indicates poor.

### Manufacturing of lithium secondary battery

A positive electrode active material (NCM65 1520), a conductive material (Li-435), and a PVDF binder (KF9700, Ad-c01) were mixed at a weight ratio of 96.5 : 1.5 : 2.0 in N-methylpyrrolidone to prepare a positive electrode slurry, and the positive electrode slurry was applied on one surface of an aluminum current collector, dried at 140 °C, and then roll-pressed to manufacture a positive electrode.

A negative electrode was manufactured by a negative electrode active material in which natural graphite and artificial graphite were mixed at a ratio of 5:5, a conductive material, and a binder at a weight ratio of 95.6 : 0.9 : 3.4.

A separator was interposed between the positive electrode and the negative electrode, which were respectively manufactured by the above-described methods, to manufacture an electrode assembly, and then the electrode assembly was placed inside the battery case of each of Examples and Comparative Examples, followed by injecting an electrolyte solution to the battery case to manufacture a battery cell. The electrolyte solution was prepared by dissolving LiPF₆ with a concentration of 0.7 M in a mixed organic solvent in which ethylene carbonate (EC) : propylene carbonate (PC) : ethylmethylcarbonate (EMC) were mixed at 2: 1: 7 by volume.
1) Shrinkability test: The pouch-type battery case manufactured above was stored in an oven at a temperature of 150 °C for 30 minutes, and then an effect of high-temperature shrinkage was confirmed. That is, the degree of expansion before and after the storage at high temperatures was evaluated in four steps.
2) Thermal propagation delay test: Five of the battery cells manufactured above were made into one module, and heat was applied to one of the battery cells at a rate of 0.5 °C/sec using a heating pad. Heat propagated to an adjacent cell was measured by using a thermocouple to evaluate whether there was a delay in time for thermal propagation in four stages.
3) Penetration test: A sharp nail type was used to penetrate the battery cell manufactured above at a rate of 0.1 mm/s to conduct a nail penetration experiment, and the time of initial ignition, the size of flame during ignition, and the amount of smoke were evaluated in four stages.

**[Table 1]**

| | Shrinkage rate (%) | Thermal propagation delay test | Penetration test |
|---|---|---|---|
| Example 1 | ○ | ○ | ○ |
| Example 2 | ⊚ | ⊚ | ○ |
| Comparative Example 1 | Δ | X | Δ |
| Comparative Example 2 | ○ | Δ | Δ |

Referring to Table 1 above, it can be seen that compared to Comparative Examples 1 and 2, Examples 1 and 2 exhibit an excellent effect in all of the shrinkage force, thermal propagation, and penetration tests. Specifically, it can be confirmed that Comparative Example 1 in which a shape-memory resin film is not applied clearly exhibits that overall safety is reduced, and in the case of disposing a shape-memory resin film on an outer layer of the pouch-type battery case rather than the gas barrier layer as in Comparative Example 2, the evaluation in the penetration test by an external impact is rather poorer than that of Examples, and the time delay effect is not excellent either in the thermal propagation test.

**[Description of the Reference Numerals or Symbols]**

| | | | |
|---|---|---|---|
| 100: | General pouch film laminate | | |
| 100a: | Shrinkable pouch film laminate | | |
| 110: | Base layer | 120: | Gas barrier layer |
| 130: | Sealant layer | 140: | Shape-memory resin film |
| 200: | Lithium secondary battery | 210: | Pouch-type |
| | | | battery case |
| 240: | Cup portion | 241: | Receiving space |
| 242: | Flat portion | 243: | Inclined portion |
| 250: | Terrace portion | 251: | Sealing portion |
| 260: | Electrode assembly | 270: | Electrode tab |
| 280: | Electrode lead | 290: | Lead film |

## Claims

1. A pouch-type battery case comprising a shrinkable pouch film laminate in which a base layer, a gas barrier layer, and a sealant layer which are sequentially stacked, and a shape-memory resin film is disposed between the gas barrier layer and the sealant layer.

2. The pouch-type battery case of claim 1, wherein the shape-memory resin film has a thickness of 30 µm to 80 µm.

3. The pouch-type battery case of claim 1, wherein the pouch-type battery case is provided with:
a cup portion having a recessed shape to receive an electrode assembly; and
a sealing portion formed along the circumference of the cup portion,
wherein the shrinkable pouch film laminate is provided in a region excluding the sealing portion.

4. The pouch-type battery case of claim 3, wherein the shrinkable pouch film laminate is provided in a cup portion spaced apart from the sealing portion by a width equal to or greater than a width of the sealing portion.

5. The pouch-type battery case of claim 3, wherein the sealing portion is provided with a general pouch film laminate without a shape-memory resin film.

6. The pouch-type battery case of claim 1, wherein the shape-memory resin film comprises one or more selected from the group consisting of fluorinated ethylene propylene (FEP), polytetrafluoroethylene (PTFE), polyolefin, Poly vinyl chloride (PVC), polyvinylidene fluoride (PVDF), silicone rubber, and a fluoropolymer elastomer.

7. The pouch-type battery case of claim 1, wherein the shape-memory resin film memorizes a shape such that the shape-memory resin film shrinks by at least 500% based on the area at 100°C or higher.

8. The pouch-type battery case of claim 1, wherein the gas barrier layer comprises aluminum.

9. The pouch-type battery case of claim 1, wherein, in the shrinkable pouch film laminate, the shape-memory resin film is additionally disposed between the base layer and the gas barrier layer.

10. The pouch-type battery case of claim 1, wherein the base layer has a multi-layered structure including two or more layers formed of different polymers from each other, wherein the shape-memory resin film is additionally disposed between the outermost layer and the innermost layer of the multi-layered structure.

11. A lithium secondary battery comprising:
the pouch-type battery case of any one of claim 1 to claim 10; and
an electrode assembly accommodated inside the pouch-type battery case.
